# EUROPEAN PATENT SPECIFICATION

(11) **EP 2 700 765 B1**
(45) Date of publication and mention of the grant of the patent: **18.12.2019**
(21) Application number: 13180991.5
(22) Date of filing: 20.08.2013
(51) Int. Cl.: E04F 11/16, B32B 5/18, B29C 53/06, B32B 3/04, B32B 3/26, B32B 3/30, E04F 11/17

(54) **A PANEL AND A METHOD FOR MANUFACTURING SAME**
PANEEL UND VERFAHREN ZU DESSEN HERSTELLUNG
PANNEAU ET SON PROCÉDÉ DE FABRICATION

(30) Priority: 24.08.2012 NL 2009361
(43) Date of publication of application: 26.02.2014
(73) Proprietor: Vakman Interieur Concepten B.V., 5161 CA Sprang-Capelle (NL)
(72) Inventor: Krooswijk, Arnoldus Nicolaas Henry Willem, 4791 PA Klundert (NL); Zonligt, Maurice Herman, 4791 PA Klundert (NL)
(74) Representative: Plaggenborg, Menko Bernard

(56) References cited:
- EP-A1- 0 061 707
- WO-A1-2012/069673
- DE-U1- 9 418 912
- JP-U- H0 459 227
- DATABASE WPI Week 201020 Thomson Scientific, London, GB; AN 2010-C45284 XP002696685, -& KR 100 943 332 B1 (DAEBO HOUSING CO LTD) 19 February 2010 (2010-02-19)

## Description

The present invention relates to a panel according to the preamble of claim 1. The invention furthermore relates to a method for manufacturing such a panel.

A panel like this is known in the art. For example, Japanese patent application JP2005290814A describes a panel that is intended as a trim panel for renovation of a stair. The panel parts are folded along V-shaped recesses so as to provide a folded panel. A veneer layer is provided as a cover for an MDF (or similar) base material of said panel. The panel is folded such that the veneer is positioned at the outside of said panel. For preventing damaging of said veneer layer near the panel's side edges during use and for preventing said veneer layer from releasing from said base material due to stresses when folding said panel, the MDF base material is replaced by a solid wood strip and subsequently bevelled, such that said strip of solid wood will be positioned at the surface. The veneer layer is removed near the side edge as well. By applying said panel, wear near said side edge will not reveal MDF base material; only said strip of solid wood will become visible.

Such a panel has as a disadvantage that several steps are required for manufacturing said panel. Furthermore, a transition from veneer to solid wood will remain visible.

Other panels for renovation of stairs for use as a trim panel apply butt glue or nail joints. Mostly, these are manufactured from solid wood, optionally provided with a protective finish. Such panels suffer from the disadvantage of high costs, due to the material used.

For example, International patent application WO2012/069673 relates to a trim panel obtained from a panel, manufactured from a rigid sheet-like base material and a finish provided on top of a first main surface of said base material. Said sheet-like base material comprises two V-shaped grooves at a second main surface directed away from said finished surface, said recesses reaching down to said first main surface. The finish is comprised of a decorative layer and a wear layer. Both layers are rigid layers; as a consequence it is specifically identified that the connection between said decorative layer and said wear layer should be flexible. A practical use of such known trim panels for stairs has turned out to be not possible since bending said sheet-like base material yields a too large elongation of both layers yielding a discoloration of said decorative layer. Because of this extensive elongation, the life time is very short, maximally a few months, even upon limited use. Then, the decorative layer is completely worn.

Japanese patent application JP-H04 59227 relates to nosing element comprised of a rigid base material and a finish layer. The finish layer does not comprises a rigid material, whereas a flexible material is provided at the back side of the base layer.

German published Gebrauchsmuster DE 9418912U1 describes a nosing element with a common non-specified finishing layer. So as to minimize forces on said finishing layer, an insert is provided at the folded edges of the nosing element.

Korean patent KR 100943332B1 mentions a nosing element wherein a separate material is attached to the element's panels for providing a sufficiently strong nosing element.

European patent application EP 0061707A1 describes a nosing element wherein the finishing layer must be cut for allowing same to be folded. The thickness of the finishing layer therefore is reduced at the edge part of the nosing element, yielding an element with a reduced strength and abrasion resistance.

The present invention aims at providing an improved panel of the kind mentioned in the preamble.

The invention especially aims at providing a panel that can be manufactured easily and cheaply.

The invention also aims at providing an improved panel of the kind mentioned in the preamble that has limited wear and that will retain its shape during long time of use.

The invention especially aims at providing a trim panel for renovating stairs that can be manufactured easily and cheaply.

So as to obtain at least one of the above mentioned advantages, according to a first embodiment, the present invention provides a panel comprising the characteristics of claim 1. This panel has the advantage that it can be manufactured cheaply and easily. Furthermore, the panel has a high abrasion resistance. A further advantage is comprised of the fact that the panel's appearance can be carried out to the user's wishes.

It has also shown that the panel according to the present invention can be manufactured in a customized fashion. Such synergetic combination of easy, cheap and customized production is completely unexpected and unique in the art.

It is preferred that the sum of the angles of said V-shaped recesses is preferably 180°. The angle of a V-shaped recess is considered to be the angle between the sides of said V-shaped recess are mutually positioned. For example, both V-shaped recesses may each have an angle of 90°, such that the bent panel parts are positioned at an angle of 90°. By providing both angles such that the sum of said angles equals 180° the part that has been bent twice with respect to the original positioned part of said base material will be positioned parallel to said originally positioned part, with the consequence that both parts may be easily mutually connected. This bending step provides a robust frame to said trim panel.

It is especially preferred that said V-shaped recesses comprise a common edge at said second main surface. This way, both parts of said base material may be positioned mutually tight and may be bonded easily, especially when using an adhesive.

When positioning said V-shaped recesses such that adjacent edges of said V-shaped recesses are positioned at a distance from each other, both said parts of said base material will be positioned at a distance from each other after bending said panel along 180°, with the consequence that a structural adhesive may be applied effectively for mutually connecting said parts of said base material.

It is especially preferred that said finish layer comprises a foamed layer at said first main surface. The finish layer comprises a visible layer and a foamed layer. The visible layer is directed away from said plate-shaped base material and will, during use, provide the visible surface. In case of a trim panel, the visible layer is the abrasion layer that is to be accessed by a user. When bending said plate-shaped base material the foam layer will be compressed to some extent and provide a continuous pressure on said visible layer or abrasion layer, with the consequence that a continuous tight finish layer is obtained.

So as to obtain an abrasion resistant and tight looking finish layer, it is preferred that the finish layer comprises a linoleum layer, a vinyl layer or a pvc layer.

It is especially preferred that the finish layer comprises a foamed layer connected to said first main surface. When bending said plate-shaped base material the foam layer will be compressed to some extent and provide a continuous pressure on said upper visible layer or abrasion layer, with the consequence that a continuous tight finish layer is obtained.

According to a further embodiment it is preferred that the depth of said V-shaped recess is positioned at a distance from said first main surface, because of an increased tension that is exerted on the finish layer when bending said panel along said V-shaped recesses.

A further preferred embodiment provides a panel that is bent along said V-shaped recesses and wherein surface parts that are directed towards each other are connected by means of an adhesive. This provides a strong and long-lasting connection of said panel in a desired position, without any connection means being visible from the outside.

It is especially preferred that said adhesive is a structural adhesive, which provides a further enhanced firmness and also provides a complete freedom in dimensions.

It is especially preferred to use an MDF or HDF material as plate-shaped base material, because of the easy processability of these materials.

So as to be able to apply the present invention in wet rooms, the plate-shaped base material preferably comprises a synthetic material. Also, the use of the panel according to the present invention may be applied in outdoor use as well.

So as to be able to obtain a tight and simple panel, it is preferred that the sides of adjacent V-shaped recesses are positioned at an angle of 90°.

The invention also relates to a method for manufacturing a panel according to the invention and as mentioned above, comprising the step of providing a rigid plate-shaped base material comprising a finish layer that is provided at a first main surface of said base material, wherein said plate-shaped base material comprises two parallel V-shaped recesses at a second main surface that is directed away from said finish layer, said V-shaped recesses having a depth that substantially reaches to said first main surface, wherein said finish layer comprises a flexible material that is comprised of a compressible material that is positioned at the side of said first main surface and an abrasion resistant layer that is remote from said first main surface, and comprising the step of bending said plate-shaped base material along said V-shaped recesses, such that the side edges of said V-shaped recesses are directed towards each other, and mutually connecting said surfaces that are directed towards each other; preferably such that the step of mutually connecting said surfaces comprises the step of bonding said surfaces by means of an adhesive, preferably a structural adhesive. This method provides the advantages as mentioned above.

It is especially preferred that the depth of said V-shaped recess is positioned at a distance from said first main surface, preferably such that the depth of said V-shaped recess is positioned in said compressible layer of said finish layer, which provides the advantage as indicated with respect to the panel.

The method according to the invention furthermore preferably comprises the step of mutually bonding the surfaces that are directed towards each other by means of an adhesive, preferably a structural adhesive, which also provides the advantages as mentioned above.

The invention will now be explained with reference to a drawing. The drawing shows in:
Fig. 1 a cross section of a plate-shaped base material comprising a finish layer,
Fig. 2 the base material of Fig. 1 in a partially bent position,
Fig. 3 the base material according to Fig. 1 in a bent end position.

Same parts have been identified by means of the same reference numerals in the figures. However, some parts that may be required for obtaining a practical embodiment have not been shown for ease of understanding the drawing.

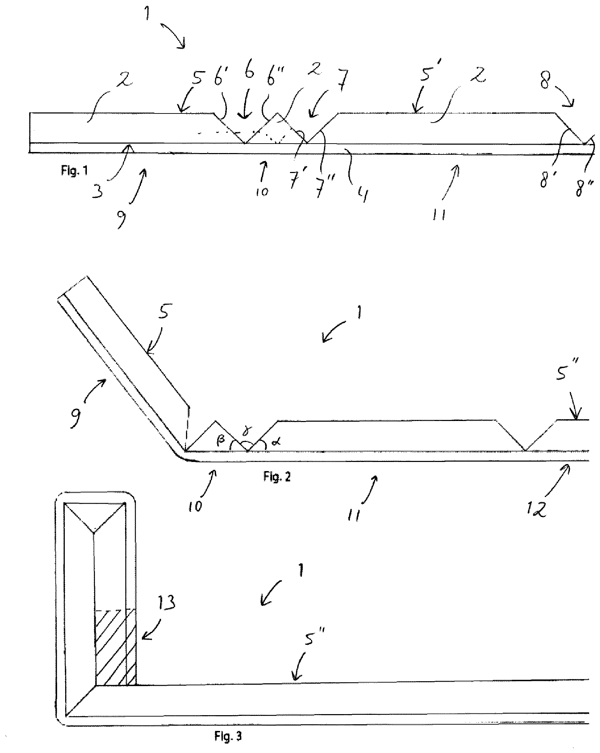

Fig. 1 shows a starting position of a combination of parts for manufacturing a panel a according to the present invention. Fig. 1 shows a plate-shaped base material 2 that is manufactured from a relatively rigid material, for example MDF or HDF. At a first main surface 3 of said plate-shaped base material 2 a finish layer 4 has been provided. Said finish layer 4 has been provided over the entire surface 3. From a side edge of a second main surface 5, being positioned opposite from said first main surface 3, V-shaped recesses 6, 7, 8 have been provided. Said V-shaped recesses 6, 7, 8 have been provided substantially to said finish layer 4.

In the embodiment shown, walls 6', 6"; 7',7"; 8', 8" of said V-shaped recesses 6; 7; 8 each are situated at an angle of 90°. Furthermore, walls 6', 6"; 7', 7"; 8', 8" of these V-shaped recesses 6; 7; 8 are each positioned at an angle of 45° with respect of said main surface 3. This ensures that by bending said panel parts 9, 10, 11, as shown in Fig. 3, these each become situated at a mutual angle of 90°. This combination of steps has been shown in Fig. 2.

Fig. 2 further shows the steps of bending said panel 1 as indicated in Fig. 3. Said panel part 9 is bent with respect to panel part 10, such that both panel parts are situated at a mutual angle of 90°. Subsequently, the bent combination of parts 9, 10 is bent with respect to panel part 11. The surface 5 is connected against surface 5', for example by means of an adhesive. Any kind of adhesive for bonding base material 2 is appropriate. Optionally, a constructional adhesive may be applied. Also, walls 6', 6" and 7', 7" may be mutually connected, optionally and preferably by means of an adhesive.

Fig. 3 shows a final situation of panel 1. The combination of bent panel parts 9, 10 and 11 has also been bent along said V-shaped recess 8. In the embodiment shown in the drawing, the combination of panel parts 9, 10, 11 is situated at an angle of 90° with respect to panel part 12.

In the embodiment of Fig. 2 the angles α and β, in the starting position or starting situation are each 45°. In this starting position, the angle γ is 90°. This ensures a right-angled connection of panel parts 10 and 11. By varying the value of the angles α and β (each time measured in the starting position as mentioned above), a panel 1 is obtained wherein the panel parts of the end product are not situated at a right angle (which is 90°) (as shown in Fig. 3, in which case the bent panel parts are mutually connected), but at a different angle. As a matter of fact, angle γ may have another value than 90°. However, so as to be able to mutually position panel parts 9 and 11 against each other, the sum of the angles γ in the V-shaped recesses 6 and 7, should be 180°.

Panel 1 is especially but not solely suitable as trim panel for a staircase to be renovated, by connecting the panel 1 to an upper surface of a stair to be renovated (that is to the side that is walked on). The connection is preferably obtained by means of an adhesive. By omitting in Fig. 3 the shaded portion of panel 1, for example by applying a shorter panel part 9 than has been shown in Fig. 1 and 2, the stair to be renovated van be received in recess 13, providing a tight fit of panel 1 in the stair to be renovated.

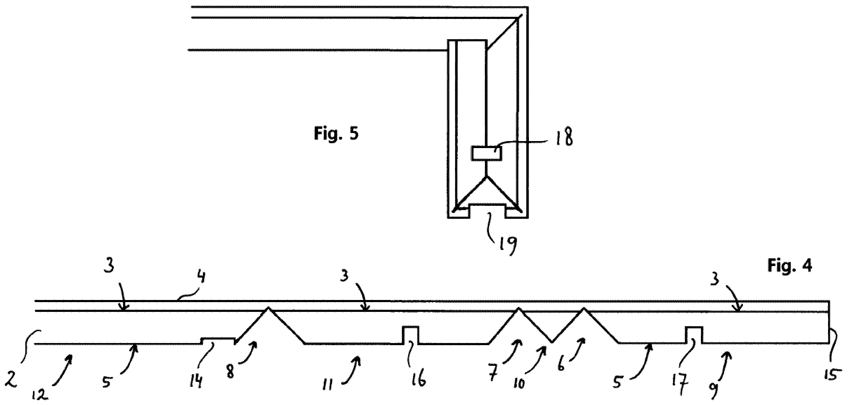

Another embodiment of the present invention has been indicated in Fig. 4 and Fig. 5. In this embodiment, at a first main surface 3 of plate-shaped base material 2 a finish layer 4 has been provided. Finish layer 4 is comprised of a compressible layer that is positioned at the side of base material 2 as well as of an abrasion resistant layer that is positioned at the side directed away from said first main surface 3, that is, away from base material 2. Finish layer 4 is provided continuously over surface 3. V-shaped recesses 6, 7, 8 have been provided at the second main surface 5, being the side opposite first main surface 3. Said V-shaped recesses 6, 7, 8 extend to the finish layer 4. This ensures a reduced tension on said finish layer when bending said plate-shaped base material along recesses 6, 7, 8. The depth of the cutting (i.e. the recess) in the finish layer may be at least 5% of the thickness of the compressible part of the finish layer, for example at least 25% of the thickness of the compressible layer, more preferably at least 40%, for example at least 50% or even 60% or at least 75%. A surprising extra is that a larger cutting of finish layer 4 yields a smaller radius of finish layer 4 when bending said panel. When cutting to about 50% of compressible layer the radius is about half the radius compared to a finish layer that has not been cut at all. This provides a tighter and more attractive appearance to the panel. Nevertheless, the abrasion resistance of finish layer 4 has been improved to a great extent by partly cutting the compressible material, because finish layer 4 undergoes a lower tension. The life time gas been increased significantly; it has improved from a few weeks to many years.

A further improved embodiment is obtained by cutting or recess 14. End 15 of part 9 may be inserted in recess 14 when bending plate-shaped base material for manufacturing panel 1, as further shown in Fig. 5, providing an improved positioning of parts 9, 10, 11, 12, especially during solidifying of said adhesive for mutual connection of said parts. It further has surprisingly shown that the glued but not completely hardened panel 1 only needs to be clamped under a right angle (a clamping force acting on parts 10 and 12) so as to keep said panel in its required position during hardening of the adhesive. Without said recess 14, a clamping force should be exerted on parts 9 and 11 as well.

Furthermore, recesses 16, 17 have been provided, which after manufacturing panel 1 as shown in Fig. 5, form a continuous common opening 18. This opening 18 will substantially pass through the full length of panel 1, for example through trim panel 1, and may serve as a passage or a tunnel for passing through wire leads of a lighting module provided in recess 19. Recess 19 may be a circular or otherwise formed recess or opening, receiving a lighting element. Through a passage in said panel (not shown) that leads to passage 18, electric power connection with electrical power lead in passage 18 may be made.

Finish layer 4 is substantially identical in all embodiments, which means that it may be comprised of a compressible layer positioned at the side of the base material 2 and an abrasion resistant layer that is positioned opposite said base material 2. The thickness of said compressible layer may be for example up to at least 90% of finish layer 4. Other percentages are possible as well. For example, up to 95% or up to 98%, but also it may be less than 90%, for example up to 80% or up to 75%.

The invention is not limited to the embodiments as described above and as shown in the drawing. The invention is only limited by the accompanying claims.

The invention also relates to any combination of measures that have been described independently of each other in this description.

## Claims

1. A panel (1), manufactured from a rigid plate-shaped base material (2) and a finish layer (4) provided on a first main surface (3) of said base material (2), said plate-shaped base material (2) comprising two parallel V-shaped recesses (6, 7) at a second main surface (5) that is directed away from said finish layer (4), having a depth that substantially reaches to said first main surface (3), **characterized in that** said finish layer (4) comprises a flexible material that is comprised of a compressible material that is positioned at the side of said first main surface (3) and an abrasion resistant layer that is remote from said first main surface (3) .

2. A panel (1) according to claim 1, wherein the sum of the angles of said V-shaped recesses (6, 7) is preferably 180°.

3. A panel (1) according to claims 1 or 2, wherein said V-shaped recesses (6, 7) comprise a common edge at said second main surface (5) .

4. A panel (1) according to claim 1, wherein adjacent edges of said V-shaped recesses (6, 7) are positioned at a distance from each other.

5. A panel (1) according to any of claims 1 - 4, wherein the finish layer (4) comprises a linoleum layer, a vinyl layer or a pvc layer.

6. A panel (1) according to claim 5, wherein said finish layer (4) comprises a foamed layer at said first main surface (3).

7. A panel (1) according to any of the preceding claims, wherein the depth of said V-shaped recess (6, 7) is positioned at a distance from said first main surface (3).

8. A panel (1) according to any of the preceding claims, wherein said panel is bent along said V-shaped recesses (6, 7) and wherein surface parts that are directed towards each other are connected by means of an adhesive, said adhesive preferably being a structural adhesive.

9. A panel (1) according to any of the preceding claims, comprising an MDF or HDF material as plate-shaped base material (2).

10. A panel (1) according to any of claims 1 - 8, wherein said plate-shaped base material (2) comprises a synthetic material.

11. A panel (1) according to any of the preceding claims, wherein the sides (6', 6"; 7', 7") of adjacent V-shaped recesses (6, 7) are positioned at an angle of 90°.

12. A panel (1) according to claim 1, wherein said plate-shaped base material (2) comprises a first V-shaped recess (6) and a second V-shaped recess (7) that comprise a common edge at the surface (5, 5') directed away from said first main surface (3), as well as a third V-shaped recess (8) that is positioned at the side of said second V-shaped recess (7) and wherein the distance between said third V-shaped recess (8) and said second V-shaped recess (7) is larger than the distance between said first V-shaped recess (6) and said second V-shaped recess (7); and
wherein a further recess (14) is provided at a side of said third recess (8) that is directed away from said first and second recesses (6, 7), for receiving an end (15) of said plate-shaped base material (2) when bending said base material (2) along said V-shaped recesses (6, 7, 8).

13. A panel (1) according to claim 1, wherein said base material (2) comprises a recess (16, 17) at said second main surface (5) for receiving an electric power supply line for lighting elements incorporated in said panel.

14. A method for manufacturing a panel (1) according any of the preceding claims, comprising the step of providing a rigid plate-shaped base material (2) comprising a finish layer (4) that is provided at a first main surface (3) of said base material (2), wherein said plate-shaped base material (2) comprises two parallel V-shaped recesses (6, 7) at a second main surface (5) that is directed away from said finish layer (4), said V-shaped recesses (6, 7) having a depth that substantially reaches to said first main surface (3), wherein said finish layer (4) comprises a flexible material that is comprised of a compressible material that is positioned at the side of said first main surface (3) and an abrasion resistant layer that is remote from said first main surface (3), and comprising the step of bending said plate-shaped base material (2) along said V-shaped recesses (6, 7, 8), such that the side edges of said V-shaped recesses (6, 7, 8) are directed towards each other, and mutually connecting said surfaces (6', 6"; 7', 7") that are directed towards each other; preferably such that the step of mutually connecting said surfaces comprises the step of bonding said surfaces by means of an adhesive, preferably an structural adhesive.

15. A method according to claim 14, wherein the depth of said V-shaped recesses (6, 7, 8) is positioned at a distance from said first main surface (3), preferably such that the depth of said V-shaped recess (6, 7, 8) is positioned in said compressible layer of said finish layer (4).

## Patentansprüche

1. Panel (1), hergestellt aus einem festen Platten-förmigen Basis-Material (2) und einer Finish-Schicht (4) auf einer ersten Hauptoberfläche des Basis-Material (2), worin das Platten-förmige Basis-Material (2) zwei parallele V-förmige Vertiefungen (6, 7) an einer zweiten Hauptoberfläche (5) aufweist, die von der Finish-Schicht (4) weggerichtet sind, und eine Tiefe aufweisen, die im Wesentlichen bis zu ersten Hauptoberfläche (3) reicht, **dadurch gekennzeichnet, dass** die Finish-Schicht (4) ein flexibles Material umfasst, das ein komprimierbares Material umfasst, das an der Seite der ersten Hauptoberfläche (3) vorgesehen ist und eine abrieb-resistente Schicht, die von der ersten Hauptoberfläche (3) entfernt ist.

2. Panel nach Anspruch 1, worin die Summe der Winkel der V-förmigen Vertiefungen (6, 7) vorzugsweise 180° ist.

3. Panel nach den Ansprüchen 1 oder 2, worin die V-förmigen Vertiefungen (6, 7) eine gemeinsame Kante an der zweiten Hauptoberfläche (5) umfassen.

4. Panel nach Anspruch 1, worin benachbarte Kanten der V-förmigen Vertiefungen (6, 7) in einer Entfernung voneinander angeordnet sind.

5. Panel (1) nach einem der Ansprüche 1 - 4, worin die Finish-Schicht (4) eine Linoleum-Schicht, eine Vinyl-Schicht oder eine PVC-Schicht umfasst.

6. Panel nach Anspruch 5, worin die Finish-Schicht (4) eine geschäumte Schicht an der ersten Hauptoberfläche (3) umfasst.

7. Panel (1) nach einem der vorstehenden Ansprüche, worin die Tiefe der V-förmigen Vertiefung (6, 7) in einer Entfernung von der ersten Hauptoberfläche (3) angeordnet ist.

8. Panel (1) nach einem der vorstehenden Ansprüche, worin das Panel entlang der V-förmigen Vertiefung (6, 7) gebogen ist und worin die Oberflächenteile, die zueinander ausgerichtet sind, mittels eines Klebstoffes verbunden sind, worin der Klebstoff vorzugsweise ein Struktur-Kleber ist.

9. Panel (1) nach einem der vorstehenden Ansprüche, welches ein MDF- oder HDF-Material als Platten-förmiges Basis-Material (2) umfasst.

10. Panel (1) nach einem der Ansprüche 1 - 8, worin das Platten-förmige Basis-Material (2) ein synthetisches Material umfasst.

11. Panel (1) nach einem der vorstehenden Ansprüche, worin die Seiten (6', 6"; 7', 7") benachbarter V-förmiger Vertiefungen (6, 7) in einem Winkel von 90° positioniert sind.

12. Panel nach Anspruch 1, worin das Platten-förmige Basis-Material (2) eine V-förmige Vertiefung (6) und eine zweite V-förmige Vertiefung (7) umfasst, die eine gemeinsame Kante an der Oberfläche (5, 5') aufweisen, die von der ersten Hauptoberfläche (3) weg ausgerichtet ist, sowie eine dritte V-förmige Vertiefung (8), die an der Seite der zweiten V-förmigen Vertiefung (7) angeordnet ist und worin die Entfernung zwischen der dritten V-förmigen Vertiefung (8) und der zweiten V-förmigen Vertiefung (7) größer ist als die Entfernung zwischen der ersten V-förmigen Vertiefung (6) und der zweiten V-förmigen Vertiefung (7); und
worin eine weitere Vertiefung (14) an einer Seite der dritten Vertiefung (8) vorgesehen ist, die von der ersten und zweiten Vertiefung (6, 7) weggerichtet ist, um ein Ende (15) des Platten-förmigen Basis-Materials (2) aufzunehmen, wenn das Basis-Material (2) entlang der V-förmigen Vertiefungen (6, 7, 8) gebogen wird.

13. Panel nach Anspruch 1, worin das Basis-Material (2) eine Vertiefung (16, 17) an der zweiten Hauptoberfläche (5) umfasst, um eine elektrische Stromversorgungsleitung für Lichtelemente, die in dem Panel inkorporiert sind, in die Vertiefung aufzunehmen.

14. Verfahren zur Herstellung eines Panels (1) nach einem der vorstehenden Ansprüche, welches den Schritt umfasst, Bereitstellen eines festen Platten-förmigen Basis-Materials (2) mit einer Finish-Schicht (4), die an einer ersten Hauptoberfläche (3) des Basis-Materials (2) vorgesehen ist, worin das Platten-förmige Basis-Material (2) zwei parallele V-förmige Vertiefungen (6, 7) an einer zweiten Hauptoberfläche (5) umfasst, die von der Finish-Schicht (4) weggerichtet sind, worin die V-förmigen Vertiefungen (6, 7) eine Tiefe aufweisen, die im Wesentlichen zu der ersten Hauptoberfläche (3) reicht, worin die Finish-Schicht (4) ein flexibles Material umfasst, das aus einem komprimierbaren Material umfasst ist, das an der Seite der erste Hauptoberfläche (3) angeordnet ist, und einer Abrieb-resistenten Schicht, die von der ersten Hauptoberfläche (3) entfernt ist, und den Schritt umfasst, Biegen des Platten-förmigen Basis-Materials (2) entlang der V-förmigen Vertiefungen (6, 7, 8), so dass die Seitenkanten der V-förmigen Vertiefungen (6, 7, 8) zueinander ausgerichtet sind, und miteinander die Oberflächen (6', 6"; 15 7', 7") verbinden, die zueinander ausgerichtet sind; vorzugsweise derart, dass der Schritt des miteinander Verbindens der Oberflächen den Schritt umfasst Bonden der Oberflächen mittels eines Klebstoffes, vorzugsweise eines Struktur-Klebers.

15. Verfahren nach Anspruch 14, wobei die Tiefe der V-förmigen Vertiefungen (6, 7, 8) in einer Entfernung von der ersten Hauptoberfläche (3) angeordnet sind, vorzugsweise so dass die Tiefe der V-förmigen Vertiefungen (6, 7, 8) in der komprimierbaren Schicht der Finish-Schicht (4) vorgesehen ist.

## Revendications

1. Panneau (1), fabriqué à partir d'un matériau de base en forme de plaque rigide (2) et d'une couche de finition (4) prévue sur une première surface principale (3) dudit matériau de base (2), ledit matériau de base en forme de plaque (2) comprenant deux évidements en forme de V parallèles (6, 7) sur une seconde surface principale (5) qui est dirigée à l'opposé de ladite couche de finition (4), ayant une profondeur qui atteint sensiblement ladite première surface principale (3), **caractérisé par le fait que** ladite couche de finition (4) comprend un matériau souple qui est constitué d'un matériau compressible qui est positionné sur le côté de ladite première surface principale (3) et d'une couche résistant à l'abrasion qui est à distance de ladite première surface principale (3).

2. Panneau (1) selon la revendication 1, dans lequel la somme des angles desdits évidements en forme de V (6, 7) est, de préférence, 180°.

3. Panneau (1) selon la revendication 1 ou 2, dans lequel lesdits évidements en forme de V (6, 7) comprennent un bord commun au niveau de ladite seconde surface principale (5).

4. Panneau (1) selon la revendication 1, dans lequel des bords adjacents desdits évidements en forme de V (6, 7) sont positionnés à une distance les uns des autres.

5. Panneau (1) selon l'une quelconque des revendications 1 à 4, dans lequel la couche de finition (4) comprend une couche de linoléum, une couche de vinyle ou une couche de pvc.

6. Panneau (1) selon la revendication 5, dans lequel ladite couche de finition (4) comprend une couche en mousse sur ladite première surface principale (3).

7. Panneau (1) selon l'une quelconque des revendications précédentes, dans lequel la profondeur dudit évidement en forme de V (6, 7) est positionnée à une distance de ladite première surface principale (3).

8. Panneau (1) selon l'une quelconque des revendications précédentes, ledit panneau étant plié le long desdits évidements en forme de V (6, 7) et des parties de surface qui sont dirigées l'une vers l'autre sont reliées au moyen d'un adhésif, ledit adhésif étant, de préférence, un adhésif structurel.

9. Panneau (1) selon l'une quelconque des revendications précédentes, comprenant un matériau MDF ou HDF en tant que matériau de base en forme de plaque (2).

10. Panneau (1) selon l'une quelconque des revendications 1 à 8, dans lequel ledit matériau de base en forme de plaque (2) comprend un matériau synthétique.

11. Panneau (1) selon l'une quelconque des revendications précédentes, dans lequel les côtés (6', 6" ; 7', 7") d'évidements en forme de V adjacents (6, 7) sont positionnés à un angle de 90°.

12. Panneau (1) selon la revendication 1, dans lequel ledit matériau de base en forme de plaque (2) comprend un premier évidement en forme de V (6) et un deuxième évidement en forme de V (7) qui comprennent un bord commun au niveau de la surface (5, 5') dirigée à l'opposé de ladite première surface principale (3), ainsi qu'un troisième évidement en forme de V (8) qui est positionné sur le côté dudit deuxièmes évidement en forme de V (7), et la distance entre ledit troisième évidement en forme de V (8) et ledit deuxième évidement en forme de V (7) est plus grande que la distance entre ledit premier évidement en forme de V (6) et ledit deuxième évidement en forme de V (7) ; et
un autre évidement (14) est prévu sur un côté dudit troisième évidement (8) qui est dirigé à l'opposé desdits premier et deuxième évidements (6, 7), pour recevoir une extrémité (15) dudit matériau de base en forme de plaque (2) lors du pliage dudit matériau de base (2) le long desdits évidements en forme de V (6, 7, 8).

13. Panneau (1) selon la revendication 1, dans lequel ledit matériau de base (2) comprend un évidement (16, 17) sur ladite seconde surface principale (5) pour recevoir une ligne d'alimentation électrique pour des éléments d'éclairage incorporés dans ledit panneau.

14. Procédé pour fabriquer un panneau (1) selon l'une quelconque des revendications précédentes, comprenant l'étape de disposition d'un matériau de base en forme de plaque rigide (2) comprenant une couche de finition (4) qui est prévue sur une première surface principale (3) dudit matériau de base (2), ledit matériau de base en forme de plaque (2) comprenant deux évidements en forme de V parallèles (6, 7) sur une seconde surface principale (5) qui est dirigée à l'opposé de ladite couche de finition (4), lesdits évidements en forme de V (6, 7) ayant une profondeur qui atteint sensiblement ladite première surface principale (3), ladite couche de finition (4) comprenant un matériau souple qui est constitué d'un matériau compressible qui est positionné sur le côté de ladite première surface principale (3) et d'une couche résistant à l'abrasion qui est à distance de ladite première surface principale (3), et comprenant l'étape de pliage dudit matériau de base en forme de plaque (2) le long desdits évidements en forme de V (6, 7, 8), de telle sorte que les bords latéraux desdits évidements en forme de V (6, 7, 8) sont dirigés l'un vers l'autre, et de liaison mutuelle desdites surfaces (6', 6" ; 7', 7'') qui sont dirigées l'une vers l'autre ; de préférence de telle sorte que l'étape de liaison mutuelle desdites surfaces comprend l'étape de collage desdites surfaces au moyen d'un adhésif, de préférence un adhésif structurel.

15. Procédé selon la revendication 14, dans lequel la profondeur desdits évidements en forme de V (6, 7, 8) est positionnée à une distance de ladite première surface principale (3), de préférence de telle sorte que la profondeur dudit évidement en forme de V (6, 7, 8) est positionnée dans ladite couche compressible de ladite couche de finition (4).
